# EUROPÄISCHE PATENTSCHRIFT

(11) **EP 2 805 175 B1**
(45) Veröffentlichungstag und Bekanntmachung des Hinweises auf die Patenterteilung: **22.03.2017**
(21) Anmeldenummer: 13700494.1
(22) Anmeldetag: 07.01.2013
(51) Int. Cl.: G01S 3/801, G01S 3/86

(54) **VERFAHREN UND VORRICHTUNG ZUM VERARBEITEN VON WASSERSCHALLSIGNALEN**
METHOD AND DEVICE FOR PROCESSING WATER-BORNE SOUND SIGNALS
PROCÉDÉ ET DISPOSITIF DESTINÉS À TRAITER DES SIGNAUX SONORES SE PROPAGEANT DANS L'EAU

(30) Priorität: 17.01.2012 DE 102012000788
(43) Veröffentlichungstag der Anmeldung: 26.11.2014
(73) Patentinhaber: ATLAS ELEKTRONIK GmbH, 28309 Bremen (DE)
(72) Erfinder: HÄBERLEIN, Boris, 28357 Bremen (DE)
(74) Vertreter: Weidner Stern Jeschke
(86) Internationale Anmeldenummer: PCT/EP2013/050168
(87) Internationale Veröffentlichungsnummer: WO 2013/107666

(56) Entgegenhaltungen:
- EP-A1- 2 009 459
- WO-A1-99/26234
- DE-A1- 3 520 398
- MINGZHI LU ET AL: "The Detection and Tracking of Weak Frequency Line Based on Double-detection Algorithm", MICROWAVE, ANTENNA, PROPAGATION AND EMC TECHNOLOGIES FOR WIRELESS COMM UNICATIONS, 2007 INTERNATIONAL SYMPOSIUM ON, IEEE, PI, 1. August 2007 (2007-08-01), Seiten 1195-1198, XP031167575, ISBN: 978-1-4244-1044-6
- DE MOURA N N ET AL: "Independent Component Analysis for Optimal Passive Sonar Signal Detection", INTELLIGENT SYSTEMS DESIGN AND APPLICATIONS, 2007. ISDA 2007. SEVENTH INTERNATIONAL CONFERENCE ON, IEEE, PISCATAWAY, NJ, USA, 1. Oktober 2007 (2007-10-01), Seiten 671-678, XP031165296, ISBN: 978-0-7695-2976-9

## Beschreibung

Die Erfindung betrifft ein Verfahren zum Verarbeiten von Wasserschallsignalen gemäß dem Oberbegriff von Anspruch 1 sowie eine Vorrichtung zum Ausführen des Verfahrens gemäß dem Oberbegriff von Anspruch 8.

Aus der Luftschalltechnik und auch aus der Wasserschalltechnik ist bekannt, das Körper anhand der von ihnen abgestrahlten Betriebsgeräusche geortet, detektiert und klassifiziert werden können. So erzeugen Fahrzeuge, wie bspw. Oberflä-chenschiffe, bemannte oder unbemannte Unterwasserfahrzeuge sowie Unterwasserlaufkörper während der Fahrt eine akustische Signatur.

Die Betriebsgeräusche derartiger Fahrzeug werden hauptsächlich durch Antriebsmaschinen verursacht. Ein Schiff erzeugt bspw. während seiner Fahrt ein Betriebsgeräusch, welches durch den antreibenden Propeller periodischen Lautstärkeschwankungen im Bereich von einigen Hertz aufweist. Diese Lautstärkeschwankungen sind mit einer Amplitudenmodulation eines Rauschträgers vergleichbar und charakteristisch für jedes propellerangetriebene Fahrzeug.

Ab einer bestimmten Propellerblattgeschwindigkeit treten Kavitationsgeräusche auf. Kavitation entsteht beim Propeller an den Blattspitzen und -flächen, wenn der Unterdruck durch die Umdrehungsbewegung so groß wird, dass die Flüssigkeit zerreist und eine Gasblasenbildung stattfindet. Die Implosion dieser Gasbläschen erzeugt kurze akustische Impulse mit großer Intensität. Kavitierende Propellerblätter erzeugen somit durch ihre Drehung im Wasser ein amplitudenmoduliertes Breitbandgeräusch. Die Modulationsanteile sind dabei tieffrequent und entsprechen Harmonischen der Drehfrequenz des Propellers. Sie geben bspw. Auskunft über die Anzahl der antreibenden Propeller, ihre Drehzahl und die Blattzahl, woraus auf den Fahrzeugtyp geschlossen werden kann. Um die in der Einhüllenden des modulierten Signals befindlichen Informationen zu erhalten, wird herkömmlicherweise das DEMON-Analyseverfahren angewandt (DEMON = Detection of Envelope Modulation on Noise). Ein derartiges Verfahren ist in DE 35 31 230 C2 beschrieben.

Da Umweltbedingungen wie Seegang, Temperatur, Salzgehalt des Wassers oder Strömungen das Betriebsgeräusch des zu klassifizierenden Fahrzeugs beeinflussen, kann der gleiche Schiffstyp unter anderen Bedingungen eine veränderte Geräuschsignatur haben. Ein Bediener der Sonaranlage ist jedoch in der Lage über einen Horchkanal, anhand subtiler Geräuschunterschiede eines akustischen Sonarsignals die unterschiedlichsten Informationen wie z.B. Schiffsklasse und Geschwindigkeit des abgehorchten Fahrzeugs herauszuhören.

Bei der Detektion und Klassifizierung von Fahrzeugen anhand von über einen Horchkanal übertragenen Sonarsignalen ist es wichtig, dass das Audio-Sonarsignal möglichst störungs- und unterbrechungsfrei ausgegeben wird. Ist das Nutz/Störverhältnis jedoch relativ klein, wird das zu detektierende Betriebsgeräusch vom Umgebungsgeräusch überdeckt, z.B. wegen der Lautstärke des Störungsgeräusches oder weil das zu detektierende Fahrzeug weit entfernt ist. Werden zwei Fahrzeuge unter der gleichen Peilung erfasst, ist eine akustische Klassifizierung durch den Bediener ggf. nicht möglich, da sich die Betriebsgeräusche überlagern.

In der EP 2 009 459 A1 wird ein Verfahren zur verbesserten DEMON-Berechnung mittels Teilband-Signalen zur Auswertung von Unterwasserschallsignalen durch Passiv-Sonar-Anlagen und Erstellung von Unterwasserlagebildern unter Anwendung der DEMON-Analyse (DEMON = Demodulation of Envelope Modulation on Noise) offenbart, indem die Unterwasserschallsignale, die einem amplitudenmodulierten Breitbandgeräusch entsprechen, welches durch die Schiffsschrauben und -wellen entsteht, mittels einer auf Tief- und Hochpässen bestehenden Baumfilterbank gefiltert werden und die Signaleinhüllende als Informationsträger durch Demodulation gewonnen wird, aus der nach einer Spektralanalyse dem DEMON-Gramm errechnet wird.

In Mingzhi Lu et al. "The Detection and Tracking of Weak Frequency Line Based on Double-detection Algorithm (Microwave, Antenna, Propagation and EMC Technologies for Wireless Communications, 2007 International Symposium on, IEEE, PI, 1. August 2007, Seiten 1195 - 1198, ISBN 978-1-4244-1044-6) beschreibt die verbesserte automatische Detektion von schmalbandigen Signalen, welche von einem passiven Sonarsystem empfangen werden. Ein DoppelDetektionsalgorithmus bei einem niedrigeren Signal-Rausch-Verhältnises wird auf Basis einer Doppel-Schwellenwert-Detektion vorgeschlagen, um die Frequenzliniendetektion und -verfolgung zu verbessern.

Der Erfindung liegt daher die Aufgabe zugrunde, die empfangenen Wasserschallsignale derart zu verarbeiten bzw. aufzuarbeiten, dass eine Auswertung verbessert wird.

Die Erfindung löst dieses Problem durch die Merkmale eines Verfahrens zum Verarbeiten von Wasserschallsignalen gemäß Anspruch 1 sowie durch eine Vorrichtung mit den Merkmalen des Anspruchs 8.

Da der Horchkanal einer Sonaranlage für den Bediener ein wichtiger Bestandteil bei der Detektion und Klassifizierung von Fahrzeugen ist, wird erfindungsgemäß das Sonarsignal akustisch für den Bediener aufbereitet.

Über eine Empfangsantenne einer Sonaranlage werden mittels einer Vielzahl von elektroakustischen und/oder optoakustischen Wandlern Wasserschallsignale empfangen, die von auf oder im Wasser befindlichen Körpern abgestrahlt worden sind. Dabei handelt es sich vorzugsweise um Wasserschallsignale mit einer Amplitudenmodulation auf einem Rauschträger.

Eine derartige Sonaranlage weist ferner einen Richtungsbildner auf, in dem in den Wandlern erzeugte Empfangssignale zu Gruppensignalen jeweils einer Richtcharakteristik verarbeitet werden. Dazu werden die Empfangssignale der Wandler derart zeitverzögert, dass sie bezogen auf eine Hauptrichtung der Richtcharakteristik konphas zueinander sind, und anschließend zur Bildung des Gruppensignals aufaddiert.

Für eine nachfolgende DEMON-Analyse wird das Gruppensignal jeweils einer Richtcharakteristik verwendet. Das abgetastete Gruppensignal wird für die DEMON-Analyse in bekannter Art und Weise bandbegrenzt und bezüglich ihrer Einhüllenden demoduliert. In einer Analyseeinheit wird ein entsprechendes Frequenzspektrum und/oder ein aus diesem Frequenzspektrum abgeleitetes Spektrum, insbesondere ein Amplitudenspektrum, erzeugt.

Ein Schwellenwertmodul legt mindestens einen Schwellenwert fest, wobei das Festlegen manuell durch einen Bediener oder automatisch erfolgen kann. Ein Frequenzlinienmodul ermittelt dann anhand mindestens eines der vorbestimmten Schwellenwerte mindestens ein lokales Maximum innerhalb des Frequenzspektrums oder einem aus dem Frequenzspektrum abgeleiteten Spektrum, wobei die lokalen Maxima einzelnen Frequenzlinien entsprechen.

Aus diesen Frequenzlinien wird mittels einer Spektrumberechnungseinheit ein synthetisches Spektrum erzeugt, welches einer Spektralsynthese, insbesondere einer DEMON-Synthese, bereitgestellt wird, die daraus ein entsprechendes synthetisches Zeitsignal erzeugt. Durch Anwendung eines Modulationsverfahrens, insbesondere der Amplitudenmodulation, wird entsprechend der Spektralsynthese mittels eines Modulationsmoduls aus dem synthetischen Zeitsignal und einem Trägersignal dann ein synthetisches amplitudenmoduliertes Signal erzeugt, welches als akustisches Signal dem Bediener ausgegeben wird.

Das hat den Vorteil, dass sich für den Bediener ein klarerer Höreindruck auch für stark verrauschte Signale mit nur leichter Modulation ergibt.

In einer bevorzugten Ausführungsform der Erfindung werden zum Erzeugen des synthetischen Spektrums mittels des Frequenzlinienmoduls eine, mehrere oder alle ermittelten Frequenzlinien ausgewählt und/oder zusätzliche Frequenzlinien hinzugefügt. Dadurch kann für den Bediener der Höreindruck vorteilhaft verbessert werden, indem störende Frequenzlinien entfernt werden und/oder vom Schwellenwert nicht erfasste Frequenzlinien hinzugefügt werden. Die Auswahl bzw. das Zufügen der Frequenzlinien erfolgt dabei manuell durch Bedienereingriff oder automatisch, insbesondere anhand von gespeicherten Frequenzlinien-Mustern.

In einer weiteren bevorzugten Ausführungsform der Erfindung wird das synthetische Spektrum mit bekannten Frequenzlinien-Mustern aus einer Datenbank verglichen. Für den Fall, dass wenigstens ein Frequenzlinien-Muster in dem synthetischen Spektrum erkannt wird, wird mittels einer Differenzeinheit ein synthetisches Rest-Spektrum erzeugt und zwar durch Extrahieren derjenigen ermittelten Frequenzlinien aus dem synthetischen Spektrum, welche dem Frequenzlinien-Muster zugehörig sind. Mittels der Differenzeinheit wird dann ein synthetisches Muster-Spektrum aus den extrahierten Frequenzlinien erzeugt, welches anschließend einer Spektralsynthese unterzogen wird. Das synthetische Rest-Spektrum entspricht nun einem neuen synthetischen Spektrum, welches ebenfalls mit bekannten Frequenzlinien-Mustern der Datenbank verglichen wird.

Die vorstehend genannten Schritte werden solange ausgeführt, bis kein Fre-quenzlinien-Muster mehr in dem synthetischen Spektrum erkannt wird. Dann wird das synthetische Spektrum als Rest-Spektrum der Spektralsynthese übergeben.

Durch die Aufteilung des Spektrums in ein Rest-Spektrum und ein oder mehrere Musterspektren für den Fall, dass wenigstens ein Frequenzlinien-Muster in dem synthetischen Spektrum erkannt wird, entsteht der Vorteil, dass eine akustische Zieltrennung bei Zielen mit gleicher Peilung möglich ist. Das zu dieser Signatur zugehörige amplitudenmodulierte Signal eines jeden Ziels wird akustisch separat dem Bediener ausgegeben.

Gemäß einer weiteren Ausführungsform der Erfindung wird mittels eines Trägermoduls ein Trägersignal aus einer Menge verfügbarer Trägersignale ausgewählt. Diese Auswahl kann manuell durch Bedienereingriff oder automatisch erfolgen. Dieses ausgewählte Trägersignal wird zur Modulation mit dem synthetischen Zeitsignal zum Erzeugen eines synthetischen amplitudenmodulierten Signals herangezogen. Dabei können als Trägersignale bspw. weißes oder rosa Rauschen oder auch typisches Seerauschen verwendet werden. Vorteilhaft ist die Verwendung eines breitbandbegrenzten Trägersignals, welches an das menschliche Gehör angepasst ist. Ferner ist die Verwendung eines monofrequenten Trägersignals vorteilhaft, um so Schwebungen für den Bediener klarer hörbar zu machen, welche durch einen Antrieb mit zwei Schiffsschrauben entstehen können.

In einer weiteren bevorzugten Ausführungsform der Erfindung wird mittels eines Speichermoduls das durch die Spektralanalyse erzeugte Frequenzspektrum oder ein aus dem Frequenzspektrum abgeleitetes Spektrum gespeichert. Durch Variation von Einstellparametern werden ein oder mehrere verschiedene synthetische Spektren aus dem gespeicherten Frequenzspektrum erzeugt, aus denen wiederum ein oder mehrere synthetische Zeitsignale erzeugt werden. Das hat den Vorteil, dass die Einstellparameter solange variiert werden können, bis ein bestes Klangergebnis bzw. ein bester Höreindruck des synthetischen amplitudenmodulierten Signals vorliegt.

Gemäß einer weiteren bevorzugten Ausführungsform der Erfindung wird die demodulierte Einhüllende des Gruppensignals der Sonaranlage mittels einer komplexen diskreten Fourier-Transformation vom Zeitbereich in den Frequenzbereich transformiert. Entsprechend dem erfindungsgemäßen Verfahren wird dann das erzeugte synthetische Spektrum mittels inverser komplexer diskreter Fourier-Transformation vom Spektralbereich in den Zeitbereich transformiert. Bevorzugt wird für die Transformation die schnelle Fourier-Transformation (FFT) bzw. inverse schnelle Fourier-Transformation (IFFT) angewandt, weil hierfür durch Ausnutzung von Symmetrien die Fourier-Transformation beschleunigt wird. Dadurch werden sowohl Zeit als auch Rechenleistung bei der Verarbeitung der Wasser-schallsignale eingespart.

In einer weiteren bevorzugten Ausführungsform der Erfindung wird dem Bediener das erfindungsgemäß verarbeitete bzw. aufbereitete Sonarsignal über eine Schallwiedergabeeinrichtung, insbesondere einen Kopfhörer und/oder einen Lautsprecher, ausgegeben. Das hat den Vorteil, dass der Bediener sofort einen Höreindruck für verschieden aufbereitete Sonarsignale bekommt, welche durch Variation von veränderbaren Parametern des Verfahrens direkt beeinflusst werden. Der Bediener kann somit vorteilhaft unmittelbar über die Parameter Einfluss nehmen und den Höreindruck individuell verändern.

Weitere vorteilhafte Ausführungsformen der Erfindung ergeben sich aus den Unteransprüchen sowie aus den anhand der anliegenden Zeichnung näher erläuterten Ausführungsbeispielen. In der Zeichnung zeigen:
- Fig. 1: ein Blockschaltbild zur Erläuterung des erfindungsgemäßen Verfahrens zum Verarbeiten von Wasserschallsignalen,
- Fig. 2: ein Beispiel für ein Rauschsignal mit Modulation,
- Fig. 3: ein Beispiel für ein DEMON-Spektrum,
- Fig. 4: ein Beispiel für ein synthetisches amplitudenmoduliertes Signal aus der DEMON-Synthese,
- Fig. 5: ein Blockschaltbild einer Erweiterung des Verfahrens um ein Vergleichsmodul mit Datenbank und
- Fig. 6: ein Blockschaltbild zur Erläuterung der Funktionsweise des Vergleichsmoduls.

Die Erfindung ist für den Einsatz des erfindungsgemäßen Verfahrens in der Wasserschalltechnik im Zusammenhang mit einer Sonaranlage näher beschrieben. Die nachfolgenden Erläuterungen sind jedoch auch auf andere Verfahren, wie bspw. Verfahren zum Verarbeiten von Signalen aus der Luftschalltechnik, anwendbar.

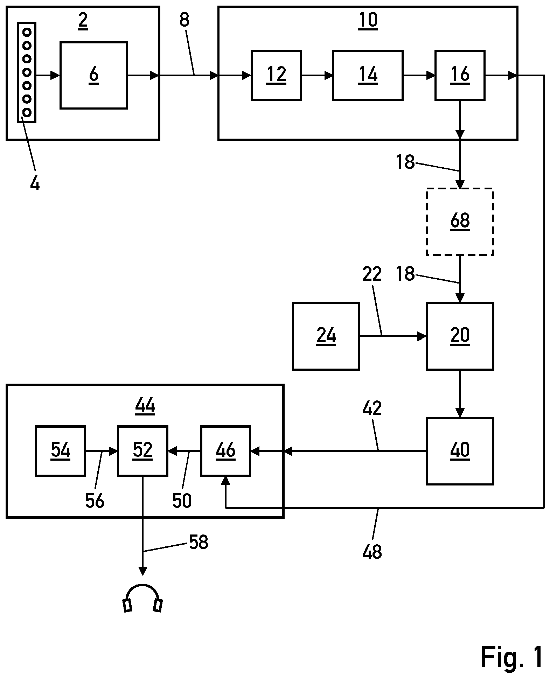

Fig. 1 zeigt ein Blockschaltbild zur Erläuterung des erfindungsgemäßen Verfahrens zum Verarbeiten von Wasserschallsignalen, insbesondere amplitudenmodu-lierte Breitbandgeräusche, welche von Fahrzeugen abgestrahlt oder gesendet werden.

Eine Sonaranlage 2 empfängt mittels einer Vielzahl elektroakustischer und/oder optoakustischer Wandler 4 Wasserschallsignale. Ferner verfügt die Sonaranlage über Mittel zur Signalverarbeitung 6 mit denen die elektrischen Empfangssignale der Wandler 4 richtungsselektiv in bekannter Weise zu Gruppensignalen zugehöriger Richtcharakteristiken verarbeitet, abgetastet und digitalisiert werden und als digitale Signale 8 zur weiteren Verarbeitung dem erfindungsgemäßen Verfahren übergeben werden.

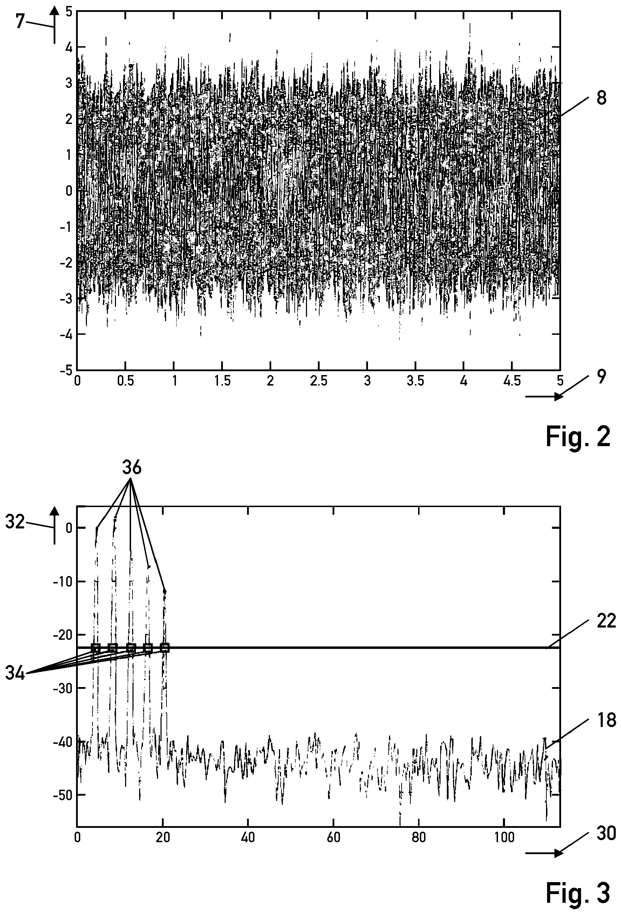

Fig. 2 zeigt beispielhaft ein Rauschsignal mit Modulation, wie es von der Sonaranlage 2 bereitgestellt wird. Es handelt sich hierbei um ein stark verrauschtes Signal mit nur leichter Amplitudenmodulation, welches dem Bediener nur schwer eine Detektion bzw. Klassifikation des Ziels ermöglicht. Dabei ist auf einer vertikalen Achse 7 die Amplitude des Signals 8 über der auf einer horizontalen Achse 9 angegebenen Zeit dargestellt.

Die digitalen Signale 8 der Sonaranlage 2 werden der DEMON-Analyse 10 übergeben. Diese weist einen Bandpass 12, einen Hüllkurvendemodulator 14 sowie eine Analyseeinheit 16 auf.

Der Bandpass 12 dient dazu, die empfangenen Signale auf den informationstragenden Frequenzbereich zu beschränken. Vorzugsweise werden die Bandgrenzen anhand einer hohen Energiedichte in dem Signal festgelegt, da dort wahrscheinlich die meisten Informationen enthalten sind.

Ferner weist die DEMON-Analyse 10 einen Hüllkurvendemodulator 14, vorzugsweise mit einem Tiefpass auf, an dessen Ausgang der zeitliche Verlauf der Einhüllenden des bandbegrenzten Sonarsignals erscheint. Da es sich bei den empfangenen Wasserschallsignalen um amplitudenmodulierte Breitbandgeräusche handelt, ist die Amplitude des Trägersignals zu einer variablen Amplitude durch das Nutzsignal umgewandelt. Das Nutzsignal ist somit als Hüllkurve der Trägerschwingung in dem Signal enthalten.

Die nachgeschaltete Analyseeinheit 16 enthält Mittel, um die Einhüllende des bandpassgefilterten Signals in den Spektralbereich zu transformieren und somit DEMON-Spektren 18 zu erzeugen. Die Transformation erfolgt bevorzugt mittels komplexer diskreter Fourier-Transformation. Die von der Analyseeinheit 16 ermittelten DEMON-Spektren 18 sind somit Frequenzspektren, welche vorzugsweise durch Betragsbildung und Normierung in ein normiertes Amplitudenspektrum bzw. Leistungsspektrum überführt werden. Es wäre auch denkbar, weitere aus dem DEMON-Spektrum 18 abgeleitete Spektren zu ermitteln, wie bspw. ein Energiespektrum oder ein durch Anwendung mathematischer Funktionen, wie der Logarithmusfunktion und/oder durch Addition und/oder Multiplikation mit einer jeweiligen Konstante erhaltenes Spektrum. Hier und im Weiteren soll jedoch beispielhaft nur das Amplitudenspektrum betrachtet werden.

In einem Frequenzlinienmodul 20 werden mittels eines Schwellenwertes 22, welcher von einem Schwellenwertmodul 24 bereitgestellt wird, Frequenzlinien in dem DEMON-Spektrum 18 bestimmt. Die Festlegung des Schwellenwertes 22 in dem Schwellenwertmodul 24 erfolgt dabei manuell durch Bedienereingriff oder automatisch. Dabei ist die Erfindung nicht auf einen Schwellenwert beschränkt. Vielmehr können beliebig viele, voneinander verschiedene Schwellenwerte dem Frequenzlinienmodul 20 übergeben werden.

Fig. 3 zeigt beispielhaft ein DEMON-Spektrum 18, wie es von der DEMON-Analyse 10 ermittelt wird und dem Frequenzlinienmodul 20 übergeben wird. Dabei wird auf einer horizontalen Achse 30 die Frequenz in Hertz aufgetragen und auf einer vertikalen Achse 32 die Amplitude in Dezibel. Das DEMON-Spektrum 18 setzt sich aus breitbandigen Komponenten mit annähernd kontinuierlichem Frequenzverlauf und aus schmalbandigen linienförmigen Komponenten zusammen.

Anhand eines vorbestimmten Schwellenwertes 22 werden einzelne Frequenzbereiche 34 festgelegt, in denen das DEMON-Spektrum 18 einen Amplitudenwert größer oder gleich dem vorbestimmten Schwellenwert 22 aufweist. Zu diesen ermittelten Frequenzbereichen 34 werden jeweils lokale Maxima 36 bestimmt, denen signifikante Frequenzlinien zugeordnet werden.

Entsprechend dem in Fig. 2 dargestellten Verfahren wird anhand der im Frequenzlinienmodul 20 ermittelten Frequenzlinien in einer Spektrumberechnungseinheit 40 ein synthetisches Spektrum 42 ermittelt, welches einer Spektralsynthese 44 zugeführt wird.

Da die Spektralsynthese 44 die Vorgänge der DEMON-Analyse 10 umkehrt, wird diese Spektralsynthese 44 im weiteren Verlauf der Beschreibung auch DEMON-Synthese 44 bezeichnet.

Für die DEMON-Synthese 44 wird zunächst in einer Syntheseeinrichtung 46 das synthetische Spektrum 42 in den Zeitbereich transformiert, wobei Analyse-Parameterwerte 48 aus der DEMON-Analyse 10 berücksichtigt werden können.

Zu den Analyse-Parametern 48 zählen z.B. die verwendete Fensterbreite und Fensterform zum Herausgreifen eines endlichen Zeitabschnittes des zu transformierenden Signals, die angewandte Abtastfrequenz und/oder die verwendete Anzahl an Abtastwerten. Die Transformation erfolgt dann vorzugsweise mittels inverser komplexer diskreter Fourier-Transformation, insbesondere mittels inverser schneller Fourier-Transformation (IFFT). Somit wird ein synthetisches Zeitsignal 50 erzeugt, welches entsprechend der DEMON-Synthese 44 einem Modulationsmodul 52 zugeführt wird.

Ein Trägermodul 54 stellt dem Verfahren erfindungsgemäß ein Trägersignal 56 bereit, wobei das Auswählen des Trägersignals 56 manuell durch den Bediener oder automatisch erfolgt.

Mittels einer Amplitudenmodulation wird entsprechend der DEMON-Synthese 44 in dem Modulationsmodul 52 aus dem synthetischen Zeitsignal 50 und dem Trägersignal 56 ein amplitudenmoduliertes, akustisches Signal 58 erzeugt, welches die Grundcharakteristiken des originalen Signals enthält. Dieses Signal wird dem Bediener vorzugsweise über Kopfhörer oder Lautsprecher akustisch ausgegeben.

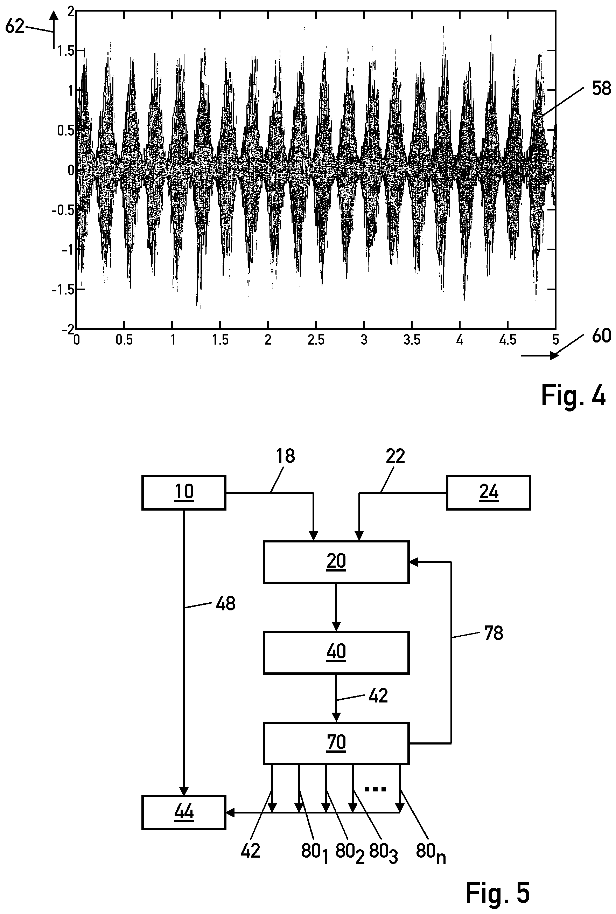

Fig. 4 zeigt ein beispielhaftes amplitudenmoduliertes, akustisches Signal 58, wie es die DEMON-Synthese 44 erzeugt. Dabei ist auf einer horizontalen Achse 60 die Zeit in Sekunden aufgetragen und auf einer vertikalen Achse 62 die Amplitude des Signals 58. Diese beispielhafte Darstellung zeigt das Syntheseergebnis für die erste detektierte Frequenzlinie aus Fig. 3.

Um dem Bediener einen potentiell besseren Höreindruck zu liefern, lassen sich in dem Verfahren zum Verarbeiten der Wasserschallsignale verschiedene Parameter variieren.

Bevorzugt lässt sich das DEMON-Spektrum 18 mittels eines Speichermoduls 68 speichern, um aus diesem Frequenzspektrum 18 der DEMON-Analyse 10 verschiedene synthetische Spektren 42 sowie verschiedene synthetische Zeitsignale 50 zu erzeugen.

Durch Festlegen von mehreren verschiedenen Schwellenwerten 22 innerhalb des Schwellenwertmoduls 24 lassen sich z.B. mehrere synthetische Spektren 42 mit jeweils einem anderen Schwellenwert 22 aus dem DEMON-Spektrum 18 erzeugen. Dadurch werden mehrere Ziele unterscheidbar, da die Betriebsgeräusche der Ziele aufgrund unterschiedlicher Entfernungen ggf. unterschiedlich laut sind und somit verschiedene Pegel bzw. Amplituden für signifikante Frequenzbereiche 34 im DEMON-Spektrum 18 aufweisen. Die Schwellenwerte 22 können dabei während des Verfahrens jederzeit manuell durch Bedienereingriff oder automatisch verändert werden.

Ein weiterer veränderbarer Parameter in dem Verfahren zum Verarbeiten von Wasserschallsignalen ist die Auswahl einzelner Frequenzlinien innerhalb des Frequenzlinienmoduls 20. Diese Frequenzlinien können für die Berechnung des synthetischen Spektrums 42 gezielt ein- bzw. ausgeblendet werden. Dies erfolgt bspw. indem der Frequenzamplitudenwert der auszublendenden bzw. einzublendenden Frequenz auf einen Wert unterhalb bzw. oberhalb des festgelegten Schwellenwertes 22 festgelegt wird. Ferner ist es denkbar, zusätzliche Frequenzlinien für die Berechnung des synthetischen Spektrums 42 hinzuzufügen.

Eine optionale Erweiterung der Erfindung sieht vor, die Frequenzlinien des DEMON-Spektrums 18 mit bekannten Frequenzlininen-Mustern, die in einer Datenbank hinterlegt sind, zu vergleichen.

Fig. 5 zeigt ein Blockschaltbild einer derartigen Erweiterung des Verfahrens zum Verarbeiten von Wasserschallsignalen. Dabei wird das vorstehend beschriebene Verfahren um ein Vergleichsmodul 70 mit einer Datenbank erweitert.

Die DEMON-Spektren 18 werden von der DEMON-Analyse 10 dem Frequenzlinienmodul 20 übergeben, welches anhand eines ersten Schwellenwertes 22 signifikante Frequenzlinien in dem DEMON-Spektrum 18 bestimmt. Die Spektrumberechnungseinheit 40 bildet daraus ein synthetisches Spektrum 42, welches dem Vergleichsmodul 70 übergeben wird.

Das Vergleichsmodul 70 weist eine Datenbank auf, in der Frequenzlinien-Muster bekannter DEMON-Spektren hinterlegt sind, anhand derer bekannte Fahrzeuge klassifiziert oder identifiziert werden können. Für einen Vergleich des synthetischen Spektrums 42 mit den Frequenzlinien-Mustern der Datenbank wird die Zielgeschwindigkeit der Geräuschquelle berücksichtigt, da ein bewegtes Ziel Spreizungen in dem Frequenzlinien-Muster abhängig von der Geschwindigkeit verursacht. Daher weist das Vergleichsmodul 70 Mittel auf, um die Geschwindigkeit des Zieles zu berücksichtigen und ggf. ein normiertes synthetisches Spektrum 42 zu berechnen, welches mit den Frequenzlinien-Mustern der Datenbank verglichen wird. Ferner ist das Vergleichsmodul 70 bevorzugt derart ausgebildet, dass es die aufgrund von Drehzahländerungen auftretenden Schwankungen des charakteristischen Spektrums berücksichtigt.

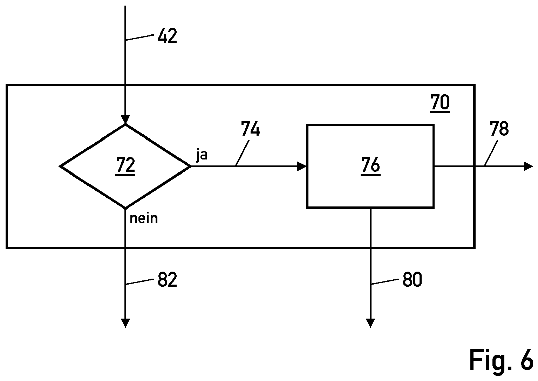

Fig. 6 zeigt eine Erläuterung der Funktionsweise des Vergleichsmoduls 70. Dabei wird für den Fall, dass bei einem Vergleich des synthetischen Spektrums 42 mit bekannten Frequenzlininen-Mustern einer Datenbank in einem Entschei-dungsblock 72 ein Frequenzlinien-Muster erkannt wird, welches den Frequenzli-nien in dem DEMON-Spektrum 18 am nächsten kommt, über den Zweig 74 eine Differenzeinheit 76 angesteuert. Diese erzeugt ein synthetisches Rest-Spektrum 78 durch Extrahieren derjenigen Frequenzlinien aus dem synthetischen Spektrum 42, welche dem Frequenzlinien-Muster entsprechen. Aus den extrahierten Frequenzlinien wird mittels der Differenzeinheit 76 ein Muster-Spektrum 80 erzeugt.

Das Rest-Spektrum 78 wird, wie in Fig. 5 dargestellt, dem Frequenzlinienmodul 20 übergeben, welches anhand des ersten oder eines weiteren Schwellenwertes 22 Frequenzlinien in dem Rest-Spektrum 78 ermittelt, aus denen ein weiteres synthetisches Spektrum 42 erzeugt wird. Dieses synthetische Spektrum 42 wird ebenfalls dem Vergleichsmodul 70 übergeben und das Verfahren, wie vorstehend anhand von Fig. 5 beschrieben, ausgeführt.

Wird jedoch kein Frequenzlinien-Muster der Datenbank in dem DEMON-Spektrum 18 erkannt, so wird von dem Entscheidungsblock 72 über einen Zweig 82 das synthetische Spektrum 42 gemäß dem vorstehend ausgeführten Verfahren der DEMON-Synthese 44 übergeben.

Auf diese Art und Weise werden je nach Anzahl der erkannten Geräuschsignaturen bis zu N verschiedene Muster-Spektren 80₁ bis 80_{N} sowie ein synthetisches Spektrum 42 des Restsignals erzeugt, welche der DEMON-Synthese 44 zugeführt werden. Die DEMON-Synthese 44 erzeugt zu den Muster-Spektren 80 und dem synthetischem Spektrum 42 des Restsignals je ein synthetisches amplitu-denmoduliertes Zeitsignal, welche akustisch separat dem Bediener ausgegeben werden, um eine akustische Zieltrennung bei Zielen mit gleicher Peilung zu ermöglichen.

Ein weiterer veränderbarer Parameter zum Verarbeiten von Wasserschallsignalen ist das vom Trägermodul 54 bereitgestellte Trägersignal 56, welches bei der Modulation des synthetischen Zeitsignals 50 verwendet wird. Somit besteht die Möglichkeit zu ein und demselben synthetischen Zeitsignal 50 verschiedene synthetische amplitudenmodulierte akustische Signale 58 zu erzeugen und dem Bediener auszugeben. Die Wiedergabe der somit verschieden aufbereiteten Audio-Signale 58 an den Bediener ermöglicht diesem eine Auswahl des besten Klangergebnisses bzw. eine Auswahl des besten Höreindrucks der ausgewählten Signatur.

Ferner ist ein veränderbarer Parameter in dem erfindungsgemäßen Verfahren ein als Modulationsgrad bezeichnetes Verhältnis von Amplitudenänderung der modulierten Trägerschwingung zur Amplitude des unmodulierten Trägers, wobei der Modulationsgrad ein Maß für die Intensität der Modulation angibt. Da die aus einem DEMON-Spektrum 18 ermittelten synthetischen Zeitsignale 50 ggf. verschiedene Amplituden aufweisen, ist der Modulationsgrad in dem Modulations-modul 52 jederzeit veränderbar. Der Modulationsgrad lässt sich manuell durch den Bediener regeln oder automatisiert durch Rechner oder Ähnliches.

Alle in der vorgenannten Figurenbeschreibung, in den Ansprüchen und in der Beschreibungseinleitung genannten Merkmale sind sowohl einzeln als auch in beliebiger Kombination miteinander einsetzbar.

## Patentansprüche

1. Verfahren zum Verarbeiten von Wasserschallsignalen, wobei die Wasserschallsignale als amplitudenmodulierte Breitbandgeräusche ausgestaltet sind, welche von Fahrzeugen abgestrahlt oder gesendet werden, wobei die Breitbandgeräusche als akustische Signale mittels einer Sonaranlage (2) empfangen und einer Spektralanalyse (10) unterzogen werden, welche aus den akustischen Signalen (8) entsprechende Frequenzspektren (18) erzeugt,
**dadurch gekennzeichnet, dass**
mindestens ein lokales Maximum (36) innerhalb des Frequenzspektrums (18) oder einem aus dem Frequenzspektrum (18) abgeleiteten Spektrum anhand von mindestens einem vorbestimmten Schwellenwert (22) ermittelt wird, wobei das lokale Maxima (36) einer einzelnen Frequenzlinie entspricht oder die lokalen Maxima (36) einzelnen Frequenzlinien des Spektrums (18) entsprechen,
ein synthetisches Spektrum (42) anhand der ermittelten Frequenzlinien erzeugt wird, welches einer Spektralsynthese (44) unterzogen wird,
mittels der Spektralsynthese (44) ein zugehöriges synthetisches Zeitsignal (50) erzeugt wird sowie ein synthetisches amplitudenmoduliertes Signal (58) aus dem synthetischen Zeitsignal (50) und einem Trägersignal (56) erzeugt wird.

2. Verfahren nach Anspruch 1,
**dadurch gekennzeichnet, dass**
zum Erzeugen des synthetischen Spektrums (42) eine, mehrere oder alle ermittelte Frequenzlinien ausgewählt werden und/oder zusätzliche Frequenzlinien hinzugefügt werden.

3. Verfahren nach Anspruch 1 oder 2,
**dadurch gekennzeichnet, dass**
das Verfahren zusätzlich folgende Schritte aufweist:
a) Vergleich des synthetischen Spektrums (42) mit bekannten Fre-quenzlinien-Muster einer Datenbank und
b)
i) falls wenigstens ein Frequenzlinien-Muster in dem synthetischen Spektrum (42) erkannt wird:
Erzeugen eines synthetischen Rest-Spektrums (78) durch Extrahieren derjenigen ermittelten Frequenzlinien aus dem synthetischen Spektrum (42), welche dem Frequenzlinien-Muster zugehörig sind,
Erzeugen eines synthetischen Muster-Spektrums (80) aus den extrahierten Frequenzlinien, welches der Spektralsynthese (44) übergeben wird und
Fortführen des Verfahrens mit Schritt a), wobei das Rest-Spektrum (78) einem neuen synthetischen Spektrum (42) entspricht.
ii) falls kein Frequenzlinien-Muster in dem synthetischen Spektrum (42) erkannt wird:
Übergeben des synthetischen Spektrums (42) der Spektralsyn-these (44).

4. Verfahren nach einem der vorhergehenden Ansprüche,
**dadurch gekennzeichnet, dass**
ein Trägersignal (56) aus einer Menge verfügbarer Trägersignale ausgewählt wird, welches zur Modulation mit dem synthetischen Zeitsignal (50) herangezogen wird.

5. Verfahren nach einem der vorhergehenden Ansprüche,
**dadurch gekennzeichnet, dass**
das durch die Spektralanalyse (10) erzeugte Frequenzspektrum (18) gespeichert wird und
durch Variation von Einstellparametern ein oder mehrere verschiedene synthetische Spektren (42) aus diesem Frequenzspektrum (18) erzeugt werden, aus denen ein oder mehrere synthetische Zeitsignale (50) erzeugt werden.

6. Verfahren nach einem der vorhergehenden Ansprüche,
**dadurch gekennzeichnet, dass**
das synthetische Spektrum (42) mittels einer inversen komplexen diskreten Fourier-Transformation, insbesondere einer inversen schnellen Fourier-Transformation, vom Frequenzbereich in den Zeitbereich transformiert wird.

7. Verfahren nach einem der vorhergehenden Ansprüche,
**dadurch gekennzeichnet, dass**
das synthetische amplitudenmodulierte Signal (58) über eine Schallwiedergabeeinrichtung, insbesondere einen Kopfhörer und/oder einen Lautsprecher, ausgegeben wird.

8. Vorrichtung zur Verarbeitung von Wasserschallsignalen, wobei die Wasserschallsignale als amplitudenmodulierte Breitbandgeräusche ausgestaltet sind, welche von Fahrzeugen abstrahlbar oder sendbar sind, wobei die Breitbandgeräusche als akustische Signale mittels einer Sonaranlage (2) empfangbar und einer Spektralanalyse (10), unterziehbar sind, wobei die Spektralanalyse (10) derart ausgestaltet ist, um aus den akustischen Signalen (8) entsprechende Frequenzspektren (18) zu erzeugen, **gekennzeichnet durch**
ein Schwellenwertmodul (24), welches derart ausgestaltet ist, um mindestens einen Schwellenwert (22) festzulegen,
ein Frequenzlinienmodul (20), welches derart ausgestaltet ist, um anhand der vorbestimmten Schwellenwerte (22) mindestens ein lokales Maximum (36) innerhalb des Frequenzspektrums (18) oder einem aus dem Frequenzspektrum abgeleiteten Spektrum zu ermitteln, wobei das lokale Maxima (36) einer einzelnen Frequenzlinie entspricht oder die lokalen Maxima (36) einzelnen Frequenzlinien entsprechen,
eine Spektrumberechnungseinheit (40), welche derart ausgestaltet ist, um anhand der ermittelten Frequenzlinien ein synthetischen Spektrum (42) zu erzeugen, wobei das synthetische Spektrum (42) einer Spektralsynthese (44), unterziehbar ist,
eine Syntheseeinrichtung (46), welche derart ausgestaltet ist, um entsprechend der Spektralsynthese (44) aus dem synthetischen Spektrum (42) ein zugehöriges synthetisches Zeitsignal (50) zu erzeugen und
ein Modulationsmodul (52), welches derart ausgestaltet ist, um entsprechend der Spektralsynthese (44) ein synthetisches amplitudenmoduliertes Signal (58) aus dem synthetischen Zeitsignal (50) und einem von einem Trägermodul (54) bereitgestellten Trägersignal (56) zu erzeugen.

9. Vorrichtung nach Anspruch 8,
**gekennzeichnet durch**
eine weitere Ausgestaltung des Frequenzlinienmoduls (20) derart, um zum Erzeugen des synthetischen Spektrums (42) eine, mehrere oder alle ermittelten Frequenzlinien auszuwählen und/oder zusätzliche Frequenzlinien hinzuzufügen.

10. Vorrichtung nach Anspruch 8 bis 9,
**gekennzeichnet durch**
eine Datenbank mit bekannten Frequenzlinien-Mustern,
ein Vergleichsmodul (70), welches derart ausgestaltet ist, um das synthetische Spektrum (42) mit bekannten Frequenzlinien-Mustern zu vergleichen, eine Differenzeinheit (76), welche derart ausgestaltet ist, um **durch** Extrahieren derjenigen ermittelten Frequenzlinien aus dem synthetischen Spektrum (42), welche dem Frequenzlinien-Muster zugehörig sind ein synthetisches Rest-Spektrum (78) zu erzeugen,
eine weitere Ausgestaltung der Differenzeinheit (76) derart, um ein synthetisches Muster-Spektrum (80) aus den extrahierten Frequenzlinien zu erzeugen und der Syntheseeinrichtung (46) zu übergeben.

11. Vorrichtung nach einem der Ansprüche 8 bis 10,
**gekennzeichnet durch**
ein Trägermodul (54), welches derart ausgestaltet ist, um ein Trägersignal (56) aus einer Menge verfügbarer Trägersignale auszuwählen, welches zur Modulation mit dem synthetischen Zeitsignal (50) heranziehbar ist.

12. Vorrichtung nach einem der Ansprüche 8 bis 11,
**gekennzeichnet durch**
ein Speichermodul (68), welches derart ausgestaltet ist, um das **durch** die Spektralanalyse (10) erzeugte Frequenzspektrum (18) zu speichern und Mittel zum Erzeugen von ein oder mehreren verschiedenen synthetischen Spektren (42) aus dem gespeicherten Frequenzspektrum (18), aus denen ein oder mehrere synthetische Zeitsignale (50) erzeugbar sind.

13. Vorrichtung nach einem der Ansprüche 8 bis 12,
**gekennzeichnet durch**
eine Ausgestaltung der Syntheseeinrichtung (46) mit Mitteln, um das synthetische Spektrum (42) mittels einer inversen komplexen diskreten Fourier-Transformation, insbesondere einer inversen schnellen Fourier-Transformation, vom Frequenzbereich in den Zeitbereich zu transformieren.

14. Vorrichtung nach einem der Ansprüche 8 bis 13,
**gekennzeichnet durch**
eine Schallwiedergabeeinrichtung, insbesondere einen Kopfhörer und/oder einen Lautsprecher, welche derart ausgestaltet ist, um das synthetische amplitudenmodulierte Signal (58) auszugeben.

## Claims

1. Method for processing water-borne sound signals, wherein the water-borne sound signals are formed as amplitude-modulated broadband noises which are emitted or transmitted from vehicles, wherein the broadband noises are received as acoustic signals by a sonar system (2) and subjected to a spectral analysis (10) which generates frequency spectra (18) corresponding to the acoustic signals (8), **characterized by** that
at least one local maximum (36)
is determined within the frequency spectrum (18)
or in a spectrum derived from the frequency spectrum (18) using at least one predetermined threshold value (22), wherein the local maximum (36) corresponds to an individual frequency line or the local maxima (36) correspond to individual frequency lines of the spectrum (18),
a synthetic spectrum (42) is generated using the determined frequency lines which is subjected to a spectral synthesis (44), an associated synthetic time signal (50) is generated by the spectral synthesis (44) and a synthetic, amplitude-modulated signal (58) is generated from the synthetic time signal (50) and a carrier signal (56).

2. Method according to Claim 1,
**characterized by** that
one, several or all determined frequency lines are selected and/or additional frequency lines are added for generating the synthetic spectrum (42).

3. Method according to Claim 1 or 2,
**characterized by** that
the method additionally comprises the following steps:
a) Comparison of the synthetic spectrum (42) with known frequency line patterns of a database and
b)
i If at least one frequency line pattern is recognized in the synthetic spectrum (42):
Generation of a synthetic residual spectrum (78) by extraction of those determined frequency lines from the synthetic spectrum (42) which belong to the frequency line pattern,
Generation of a synthetic pattern spectrum (80) from the extract-ed frequency lines which is transmitted to the spectral synthesis (44), and
Continuation of the method with step a), wherein the residual spectrum (78) corresponds to a new synthetic spectrum (42).
ii) If no frequency line pattern is recognized in the synthetic spec-trum (42):
Transmission of the synthetic spectrum (42) to the spectral synthesis (44).

4. Method according to one of the previous claims,
**characterized by** that
a carrier signal (56) from a number of available carrier signals is selected which is used for the modulation with the synthetic time signal (50).

5. Method according to one of the previous claims
**characterized by** that
the frequency spectrum (18) generated by the spectral analysis (10) is stored and one or several different synthetic spectra (42) are generated from this frequency spectrum (18) by variation of adjustment parameters, from which spectra one or more synthetic time signals (50) are generated.

6. Method according to one of the previous claims,
**characterized by** that
the synthetic spectrum (42) is transformed by an inverse, complex, discrete Fourier transformation, in particular an inverse, rapid Fourier transformation from the frequen-cy range into the time range.

7. Method according to one of the previous claims,
**characterized by** that
the synthetic, amplitude-modulated signal (58) is outputted via a sound reproduction device, in particular a headphone or a loudspeaker.

8. Device for processing water-borne sound signals, wherein the water-borne sound signals are formed as amplitude-modulated broadband noises which can be emitted or transmitted from vehicles, wherein the broadband noises can be received as acoustic signals by a sonar system (2) and subjected to a spectral analysis (10), wherein the spectral analysis (10) is designed in such a manner as to generate corresponding frequency spectra (18) from the acoustic signals (8), **characterized by**
a threshold value module (24), which is designed in such a manner as to determine at least one threshold value (22),
a frequency line module (20), which is designed in such a manner as to determine at least one local maximum (36) inside the frequency spectrum (18) or spectrum derived from the frequency spectrum using the predetermined threshold values (22), wherein the local maximum (36) corresponds to an individual frequency line or the local maxi-ma (36) correspond to individual frequency lines,
a spectrum calculating unit (40), which is designed in such a manner as to generate a synthetic spectrum (42) using the determined frequency lines, wherein the synthetic spectrum (42) can be subjected to a spectral synthesis (44),
a synthesis device (46) which is designed in such a manner as to generate, according to the spectral synthesis (44), an associated synthetic time signal (50) from the syn-thetic spectrum (42), and
a modulation module (52), which is designed in such a manner as to generate, according to the spectral synthesis (44), a synthetic, amplitude-modulated signal (58) from the synthetic time signal (50) and a carrier signal (56) made available by a carrier module (54).

9. Device according to Claim 8,
**characterized by**
a further forming of the frequency line module (20) in such a manner as to select one, several or all determined frequency lines and/or to add additional frequency lines for generating the synthetic spectrum (42).

10. Device according to Claim 8 to 9,
**characterized by**
a database with known frequency line patterns,
a comparison module (70) designed to compare the synthetic spectrum (42) with known frequency line patterns,
a differential unit (76) designed to generate a synthetic residual spectrum (78) by extracting the frequency lines determined from the synthetic spectrum (42) which belong to the frequency line pattern,
another design of the differential unit (76) in such a manner as to generate a synthetic pattern spectrum (80) from the extracted frequency lines and to transmit it to the synthesis device (46).

11. Device according to one of Claims 8 to 10,
**characterized by**
a carrier module (54) designed to select a carrier signal (56) from a number of availa-ble carrier signals, which signal can be used for the modulation with the synthetic time signal (50).

12. Device according to one of Claims 8 to 11,
**characterized by**
a storage module (68) designed to store the frequency spectrum (18) generated by the spectral analysis (10), and
means for generating one or several different synthetic spectra (42) from the stored frequency spectrum (18) from which one or several synthetic time signals (50) can be generated.

13. Device according to one of Claims 8 to 12,
**characterized by**
a design of the synthesis device (46) with means for transforming the synthetic spec-trum (42) by an inverse, complex, discrete Fourier transformation, in particular an inverse, rapid Fourier transformation from the frequency range into the time range.

14. Device according to one of Claims 8 to 13,
**characterized by**
a sound reproduction device, in particular a headphone and/or a loudspeaker designed to output the synthetic, amplitude-modulated signal (58).

## Revendications

1. Procédé de traitement de signaux se propageant dans l'eau, lesdits signaux se propageant dans l'eau existant sous la forme de bruit à large bande modulé en amplitude rayonné ou émis par des véhicules, le bruit à large bande étant reçu sous la forme de signaux acoustiques au moyen d'un sonar (2) et étant soumis à une analyse spectrale (10) permettant de produire des spectres de fréquence (18) correspondants à partir des signaux acoustiques (8),
**caractérisé en ce que :**
il est déterminé au moins un maximum local (36), à l'intérieur du spectre de fréquence (18) ou d'un spectre dérivé dudit spectre de fréquence (18), à l'aide d'au moins une valeur seuil prédéterminée (22), le maximum local (36) correspondant à une raie de fréquence particulière ou les maxima locaux (36) correspondant à des raies de fréquence particulières du spectre (18),
il est produit un spectre synthétique (42) à l'aide des raies de fréquence déterminées, lequel est soumis à une synthèse spectrale (44),
il est produit, au moyen de la synthèse spectrale (44), un signal temporel synthétique (50) associé ainsi qu'un signal synthétique modulé en amplitude (58) à partir du signal temporel synthétique (50) et d'un signal de porteuse (56).

2. Procédé selon la revendication 1,
**caractérisé en ce que :**
une, plusieurs ou la totalité des raies de fréquence déterminées sont sélectionnées et/ou des raies de fréquence supplémentaires sont ajoutées afin de produire le spectre synthétique (42).

3. Procédé selon la revendication 1 ou 2,
**caractérisé en ce que :**
le procédé présente les étapes supplémentaires suivantes :
a) comparaison du spectre synthétique (42) à des motifs de raies de fréquence connus issus d'une base de données, et
b)
i) dans le cas où au moins un motif de raies de fréquence est reconnu dans le spectre synthétique (42) :
production d'un spectre résiduel synthétique (78) par extraction, hors du spectre synthétique (42), des raies de fréquence déterminées appartenant au motif de raies de fréquence,
production d'un spectre motif synthétique (80) à partir des raies de fréquence extraites, lequel est transmis à la synthèse spectrale (44),
et
continuation du procédé avec l'étape a), dans laquelle le spectre résiduel (78) correspond à un nouveau spectre synthétique (42),
ii) dans le cas où aucun motif de raies de fréquence n'est reconnu dans le spectre synthétique (42) :
transmission du spectre synthétique (42) à la synthèse spectrale (44).

4. Procédé selon l'une des revendications précédentes,
**caractérisé en ce que :**
un signal de porteuse (56) est sélectionné parmi une pluralité de signaux de porteuse disponibles et est exploité pour la modulation avec le signal temporel synthétique (50).

5. Procédé selon l'une des revendications précédentes,
**caractérisé en ce que :**
le spectre de fréquence (18) produit par l'analyse spectrale (10) est mémorisé, et un ou plusieurs spectres synthétiques (42) différents sont produits à partir de ce spectre de fréquence (18) en faisant varier des paramètres de réglage, et un ou plusieurs signaux temporels synthétiques (50) sont produits à partir de ce ou ces spectres synthétiques.

6. Procédé selon l'une des revendications précédentes,
**caractérisé en ce que :**
le spectre synthétique (42) est transformé, du domaine fréquentiel au domaine temporel, au moyen d'une transformation de Fourier discrète complexe inverse, notamment une transformation de Fourier rapide inverse.

7. Procédé selon l'une des revendications précédentes,
**caractérisé en ce que :**
le signal synthétique modulé en amplitude (58) est délivré par un dispositif de restitution sonore, notamment un casque audio et/ou un haut-parleur.

8. Dispositif de traitement de signaux se propageant dans l'eau, lesdits signaux se propageant dans l'eau existant sous la forme de bruit à large bande modulé en amplitude susceptible d'être rayonné ou émis par des véhicules, le bruit à large bande pouvant être reçu sous la forme de signaux acoustiques au moyen d'un sonar (2) et pouvant être soumis à une analyse spectrale (10), ladite analyse spectrale (10) étant conçue de manière à produire des spectres de fréquence (18) correspondants à partir des signaux acoustiques (8),
**caractérisé par :**
un module de définition de valeur seuil (24) conçu pour définir au moins une valeur seuil (22),
un module exploitant les raies de fréquence (20) conçu pour déterminer, à l'aide des valeurs seuil prédéterminées (22), au moins un maximum local (36) à l'intérieur du spectre de fréquence (18) ou un spectre dérivé dudit spectre de fréquence, ledit maximum local (36) correspondant à une raie de fréquence particulière ou les maxima locaux (36) correspondant à des raies de fréquence particulières,
une unité de calcul de spectre (40) conçue pour produire un spectre synthétique (42) à l'aide des raies de fréquence déterminées, ledit spectre synthétique (42) pouvant être soumis à une synthèse spectrale (44),
un dispositif de synthèse (46) conçu pour produire, à partir du spectre synthétique (42), conformément à la synthèse spectrale (44), un signal temporel synthétique (50) associé, et
un module de modulation (52) conçu pour produire, conformément à la synthèse spectrale (44), un signal synthétique modulé en amplitude (58) à partir du signal temporel synthétique (50) et d'un signal de porteuse (56) fourni par un module de porteuse (54).

9. Dispositif selon la revendication 8,
**caractérisé par :**
une conception supplémentaire du module exploitant les raies de fréquence (20) pour sélectionner une, plusieurs ou la totalité des raies de fréquence déterminées et/ou pour ajouter des raies de fréquence supplémentaires afin de produire le spectre synthétique (42).

10. Dispositif selon la revendication 8 à 9,
**caractérisé par :**
une base de données contenant des motifs de raies de fréquence connus,
un module de comparaison (70) conçu pour comparer le spectre synthétique (42) à des motifs de raies de fréquence connus,
une unité de soustraction (76) conçue pour produire un spectre résiduel synthétique (78) par extraction, hors du spectre synthétique (42), des raies de fréquence déterminées appartenant au motif de raies de fréquence, et par :
une conception supplémentaire de l'unité de soustraction (76) pour produire un spectre motif synthétique (80) à partir des raies de fréquence extraites et pour le transmettre au dispositif de synthèse (46).

11. Dispositif selon l'une des revendications 8 à 10,
**caractérisé par :**
un module de porteuse (54) conçu pour sélectionner un signal de porteuse (56) parmi une pluralité de signaux de porteuse disponibles, lequel signal de porteuse peut être exploité pour la modulation avec le signal temporel synthétique (50).

12. Dispositif selon l'une des revendications 8 à 11,
**caractérisé par :**
un module de mémoire (68) conçu pour mémoriser le spectre de fréquence (18) produit par l'analyse spectrale (10) et des moyens permettant de produire un ou plusieurs spectres synthétiques (42) différents à partir du spectre de fréquence (18) mémorisé à partir desquels un ou plusieurs signaux temporels synthétiques (50) peuvent être produits.

13. Dispositif selon l'une des revendications 8 à 12,
**caractérisé par :**
une conception du dispositif de synthèse (46) avec la présence de moyens permettant de transformer le spectre synthétique (42) du domaine fréquentiel au domaine temporel au moyen d'une transformation de Fourier discrète complexe inverse, notamment une transformation de Fourier rapide inverse.

14. Dispositif selon l'une des revendications 8 à 13,
**caractérisé par :**
un dispositif de restitution sonore, notamment un casque audio et/ou un hautparleur, qui est conçu pour délivrer le signal synthétique modulé en amplitude (58).
